# EUROPÄISCHE PATENTANMELDUNG

(11) **EP 3 965 241 A1**
(43) Veröffentlichungstag der Anmeldung: **09.03.2022**
(21) Anmeldenummer: 21187811.1
(22) Anmeldetag: 26.07.2021
(51) Int. Cl.: H02G 3/14, H02G 3/10

(54) **ANSCHLUSSDOSE**

(30) Priorität: 07.09.2020 DE 102020123338
(71) Anmelder: METZ CONNECT TECH GmbH, 78176 Blumberg (DE)
(72) Erfinder: Stadler, Hermann, 78166 Donaueschingen (DE)
(74) Vertreter: Westphal, Mussgnug & Partner Patentanwälte mbB

(57) **Zusammenfassung**

Die Erfindung betrifft eine Anschlussdose (10) mit einem Bodenteil (20) und einem schwenkbar an dem Bodenteil (20) angeordneten Deckelteil (30), wobei zwischen dem Bodenteil (20) und dem Deckelteil (30) ein Federelement (40) angeordnet ist, welches derart vorgespannt ist, dass es das Deckelteil (30) aus einer geöffneten Position in eine geschlossene Position überführt, wobei an der Anschlussdose (10) ein Arretierelement (50) angeordnet ist, welches zwischen einer ersten Position und einer zweiten Position bewegbar ist, und welches in der ersten Position das Deckelteil (20) gegen die Federkraft des Federelements (40) in der geöffneten Position arretiert und in der zweiten Position das Überführen des Deckelteils (20) aus der geöffneten Position in die geschlossene Position erlaubt.

## Beschreibung

Die Erfindung betrifft eine Anschlussdose mit einem Bodenteil und einem schwenkbar an dem Bodenteil angeordneten Deckelteil, wobei zwischen dem Bodenteil und dem Deckelteil ein Federelement angeordnet ist, welches derart vorgespannt ist, dass es das Deckelteil aus einer geöffneten Position in eine geschlossene Position überführt. Durch ein derartig ausgebildetes Federelement ist sichergestellt, dass die Anschlussdose möglichst geschlossen ist, beispielsweise, um Verschmutzungen im Innenraum zu vermeiden. Insbesondere elektrische und optische Anschlussdosen sind als derartige Anschlussdosen ausgebildet.

Allerdings ist es bei derartigen Anschlussdosen oft lästig, dass der Deckel ständig zuschnappt, beispielsweise, falls im Innern der Anschlussdose Montagearbeiten erforderlich sind oder die Anschlussdose beispielsweise an einer Wand montiert werden soll. Wird der Deckel mit einer Hand offen gehalten, steht zur Montage nur noch eine Hand zur Verfügung.

Die DE 20 2013 102 862 U1 offenbart eine elektrische Anschlussdose, bei welcher ein Deckel schwenkbar an einem Grundkörper angeordnet ist, wobei ein Rastmechanismus vorhanden ist, mit dem der Deckel in einer oder verschiedenen Raststellungen zwischen der geschlossenen Stellung und der geöffneten Stellung verrastbar ist. Nachteilig bei dieser Ausgestaltung ist, dass möglicherweise beim Schließen nicht alle Raststellungen überwunden werden und der Deckel versehentlich in einer nicht vollständig geschlossenen Position verbleibt.

Die DE 20 2013 102 862 U1 offenbart auch eine elektrische Anschlussdose, bei welcher ein Deckel schwenkbar an einem Grundkörper angeordnet ist, wobei an dem Deckel ein Magnet vorhanden sein kann, welcher eine Befestigung in einer geöffneten Position erlaubt. Diese Befestigung ist allerdings nur dann möglich, wenn eine magnetisierbare Wand die Anschlussdose umgibt, an welcher der Deckel über den Magneten in der geöffneten Position fixiert werden kann.

Die Aufgabe der Erfindung besteht daher darin, eine Anschlussdose mit einem Bodenteil und einem schwenkbar an dem Bodenteil angeordneten Deckelteil bereitzustellen, welche einfacher handhabbar ist.

Die Aufgabe wird erfindungsgemäß gelöst durch eine Anschlussdose mit den Merkmalen des Patentanspruchs 1.

Vorteilhafte Ausgestaltungen und Weiterbildungen sind in den abhängigen Ansprüchen angegeben.

Die erfindungsgemäße Anschlussdose mit einem Bodenteil und einem schwenkbar an dem Bodenteil angeordneten Deckelteil, wobei zwischen dem Bodenteil und dem Deckelteil ein Federelement angeordnet ist, welches derart vorgespannt ist, dass es das Deckelteil aus einer geöffneten Position in eine geschlossene Position überführt, zeichnet sich dadurch aus, dass an der Anschlussdose ein Arretierelement angeordnet ist, welches zwischen einer ersten Position und einer zweiten Position bewegbar ist, und welches in der ersten Position das Deckelteil gegen die Federkraft des Federelements in der geöffneten Position arretiert und in der zweiten Position das Überführen des Deckelteils aus der geöffneten Position in die geschlossene Position erlaubt. Das Arretierelement ermöglicht ein Offenhalten des Deckelteils in einer geöffneten Position beispielsweise zu Montagszwecken, so dass der Benutzer beide Hände beispielsweise zur Montage zur Verfügung hat. Wird das Arretierelement aber in die zweite Position bewegt, schließt das Deckelteil zuverlässig mittels des Federelements, ohne dass es weiterer Handgriffe eines Benutzers bedarf.

Vorzugsweise ist das Arretierelement zwischen der ersten Position und der zweiten Position verschwenkbar, wodurch eine einfache Handhabung ermöglicht werden kann.

Gemäß einer vorteilhaften Weiterbildung der Erfindung ist das Arretierelement in der ersten Position mittels eines ersten Rastmechanismus fixiert. Die Fixierung in der ersten Position kann die Sicherheit der Funktion des Arretierelements erhöhen und die Gefahr eines versehentlichen Zuschnappens des Deckelelements verringern.

Gemäß einer vorteilhaften Weiterbildung der Erfindung ist das Arretierelement in der zweiten Position mittels eines zweiten Rastmechanismus fixiert. Die Fixierung in der zweiten Position kann verhindern, dass das Arretierelement sich ungewollt in die erste Position bewegt und eine ungewollte Blockade hervorruft.

Vorzugsweise ist das Arretierelement als Hebel mit einem ersten Ende und einem zweiten Ende ausgebildet, wobei der Hebel an seinem ersten Ende schwenkbar gelagert an der Anschlussdose angeordnet ist und wobei der Hebel an seinem zweiten Ende ein Anlageelement aufweist. Ein derartiges Arretierelement kann kompakt ausgebildet und konstruktiv einfach ausgebildet sein.

Eine besonders bevorzugte Ausführungsform der Erfindung sieht vor, dass das Arretierelement in der Anschlussdose angeordnet ist. Dadurch ist es bei geschlossener Anschlussdose von außen nicht zugänglich.

Vorzugsweise ist das Arretierelement an dem Deckelteil, insbesondere an der Innenseite des Deckelteils angeordnet. Eine derartige Anordnung kann die Handhabung vereinfachen.

Vorteilhafterweise sind an dem Arretierelement ein erster Haltegriff zum Überführen des Arretierelements aus der ersten Position in die zweite Position und/oder ein zweiter Haltegriff zum Überführen des Arretierelements aus der zweiten Position in die erste Position angeordnet. Derartige Haltegriffe können ein besseres Greifen des Arretierelements ermöglichen.

Gemäß einer bevorzugten Ausführungsform der Erfindung ist die Anschlussdose als elektrische oder optische Anschlussdose, insbesondere als abschließbare elektrische oder abschließbare optische Anschlussdose, ausgebildet. Insbesondere bei derartigen Anschlussdosen bietet das erfindungsgemäße Arretierelement große Vorteile, da an diesen Anschlussdosen häufig Montagen ausgeführt werden, welche beide Hände erfordern.

Die Erfindung wird anhand der nachfolgenden Figuren ausführlich erläutert. Es zeigen
- Figur 1: eine perspektivische Ansicht eines Ausführungsbeispiels einer Anschlussdose mit einem Bodenteil und einem schwenkbar an dem Bodenteil angeordneten Deckelteil mit dem Deckelteil in einer geöffneten Position und mit einem Arretierelement in einer Zwischenposition,
- Figur 2: die Anschlussdose gemäß Figur 1 mit dem Arrtierelement in einer ersten Position,
- Figur 3: eine Ausschnittvergrößerung aus Figur 1,
- Figur 4: einen Schnitt durch die Anschlussdose gemäß Figur 1 mit dem Arretierelement in der Zwischenposition,
- Figur 5: einen Schnitt durch die Anschlussdose gemäß Figur 1 mit dem Deckel in einer geschlossenen Position,
- Figur 6: einen Schnitt durch die Anschlussdose gemäß Figur 2 mit dem Arretierelement in der ersten Position und
- Figur 7: einen weiteren Schnitt durch die Anschlussdose gemäß Figur 2 mit dem Arretierelement in der ersten Position.

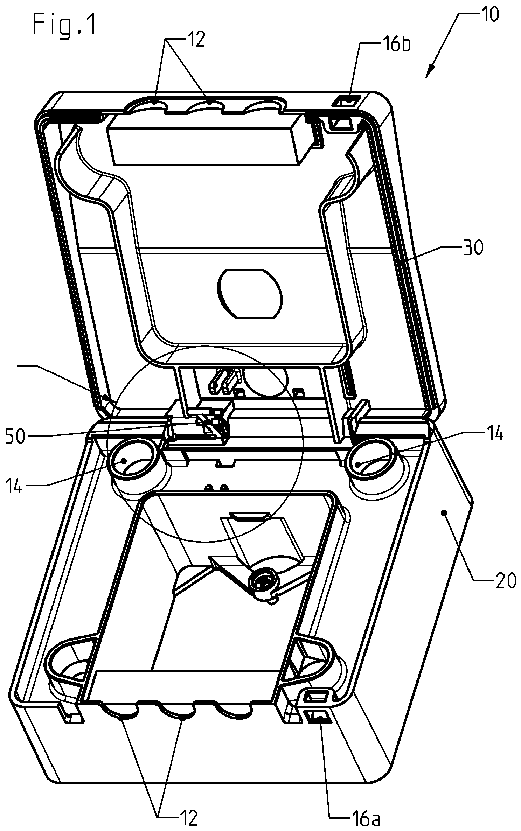

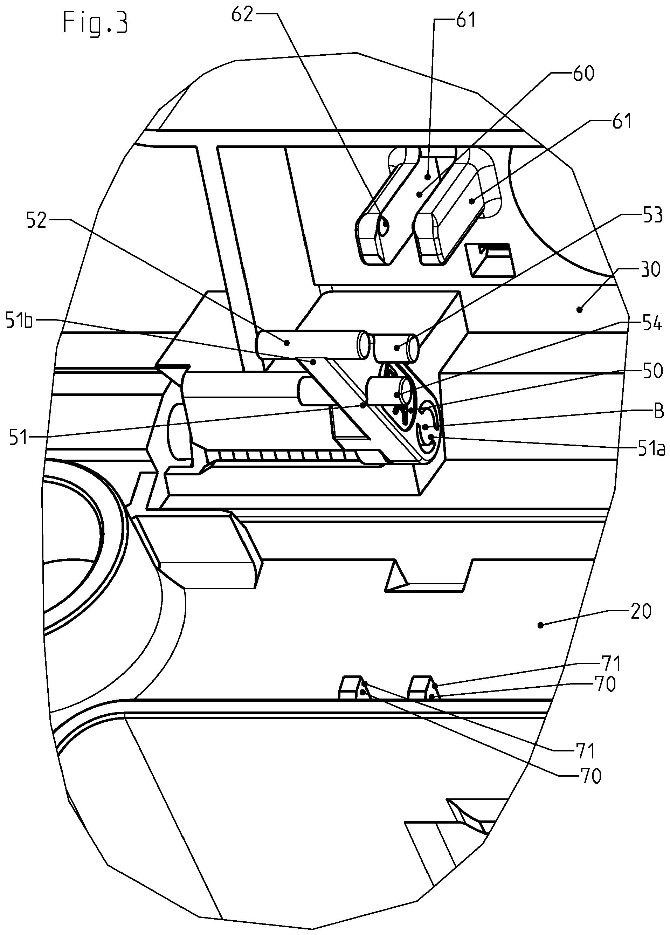

Die Figuren 1 bis 7 zeigen verschiedene Ansichten einer Anschlussdose 10 mit einem Bodenteil 20 und einem insbesondere um eine Schwenkachse A schwenkbar an dem Bodenteil 20 angeordneten Deckelteil 30.

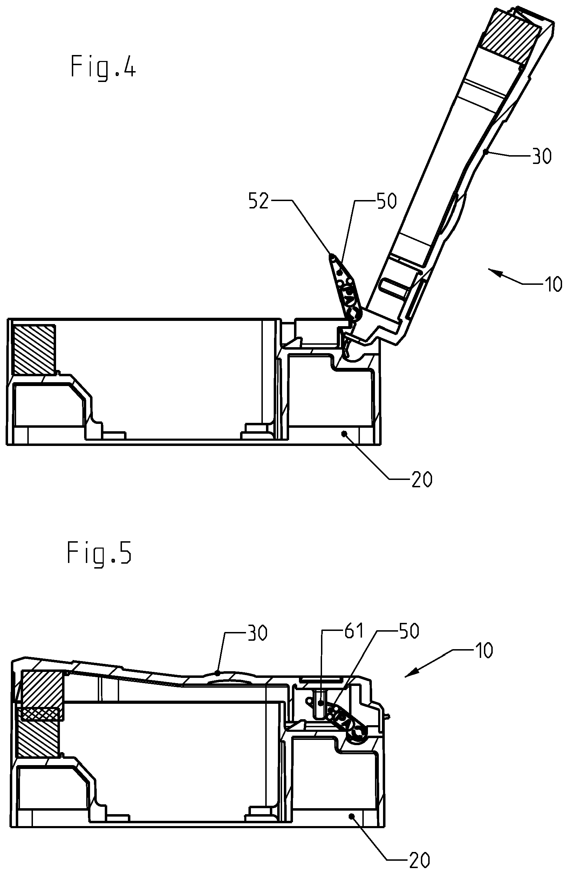

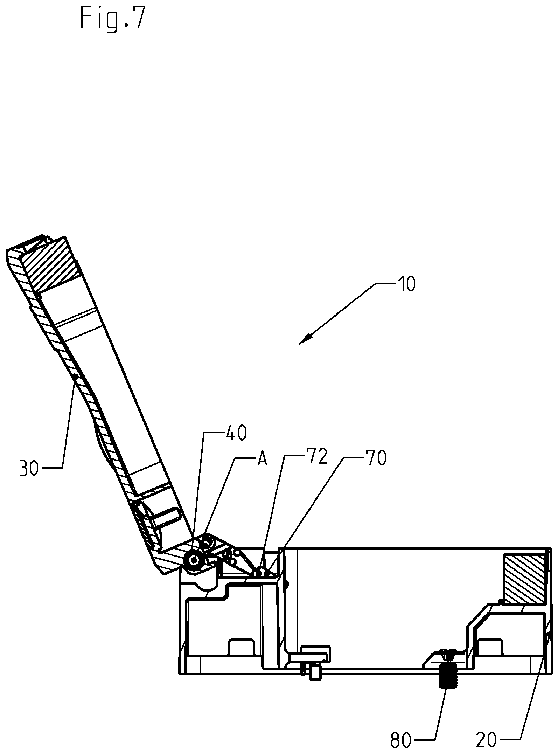

Die Anschlussdose 20 kann als elektrische oder optische Anschlussdose ausgebildet sein. Die Anschlussdose 20 kann dazu einerseits einsprechende Öffnungen 12 im Bodenteil 20 und/oder Deckelteil 30 aufweisen, durch welches angeschlossene Kabel aus der Anschlussdose 20 herausgeführt werden können. Ferner können insbesondere im Bodenteil 20 Öffnungen 14 angeordnet sein, durch welche Fixierungsmittel, insbesondere Schrauben 80 (vgl. Figur 7), zur Befestigung der Anschlussdose 20 an einer Wand geführt werden können. Es besteht die Möglichkeit, die Anschlussdose 20 abschließbar zu gestalten, beispielsweise durch zwei korrespondierende Öffnungen 16a, 16b, von denen eine Öffnung 16a im Bodenteil 20 und die andere Öffnung 16b im Deckelteil 30 angeordnet sein kann und durch welche beispielsweise der Bügel eines Bügelschlosses geführt werden kann. Zwischen dem Bodenteil 20 und dem Deckelteil 30 ist ein Federelement 40 angeordnet. Das Federelement 40 ist derart ausgebildet, dass es das Deckelteil 30 aus einer geöffneten Position (vgl. Figur 1) in eine geschlossene Position (vgl. Figur 5) überführt, sofern keine der Federkraft des Federelements 40 entgegenwirkende Kraft vorhanden ist. Gegen die Federkraft des Federelements 40 kann das Deckelteil 30 aus der geschlossenen Position in die geöffnete Position überführt werden. Das Federelement 40 kann beispielsweise als Schraubenfeder um die Schwenkachse A zwischen Bodenteil 20 und Deckelteil 30 angeordnet sein und sich einenends an dem Bodenteil 20 und anderenends an dem Deckelteil 30 abstützen.

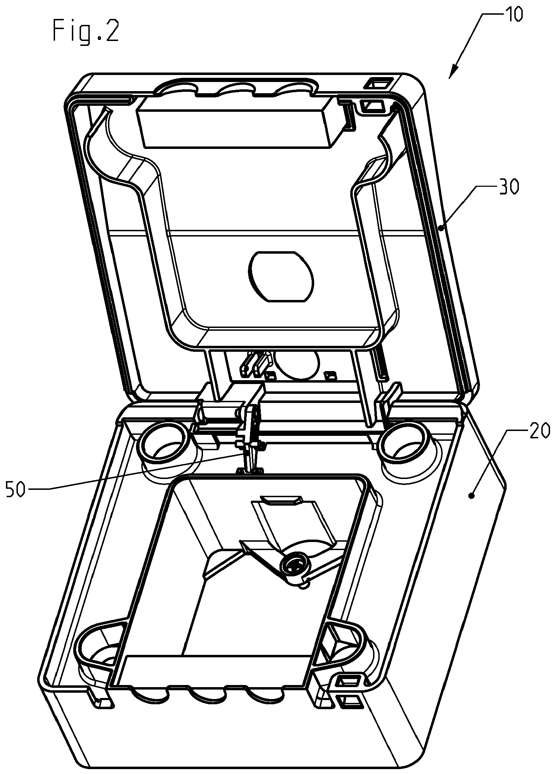

Um das Deckelteil 30 in der geöffneten Position arretieren zu können, ist ein Arretierelement 50 vorgesehen, welches zwischen einer ersten Position (vgl. Figur 2) und einer zweiten Position (vgl. Figur 5) insbesondere über eine Zwischenposition (vgl. Figur 1) bewegbar, insbesondere um eine Schwenkachse B verschwenkbar, gelagert ist. Das Arretierelement 50 kann an der Außenseite der Anschlussdose 20 angeordnet sein, ist vorzugsweise aber innerhalb der Anschlussdose 20 angeordnet. In der ersten Position arretiert das Arretierelement 50 das Deckelteil 30 gegen die Federkraft des Federelements 40 in der geöffneten Position. In der zweiten Position erlaubt das Arretierelement 50 das Überführen des Deckelteils 30 aus der geöffneten Position in die geschlossene Position.

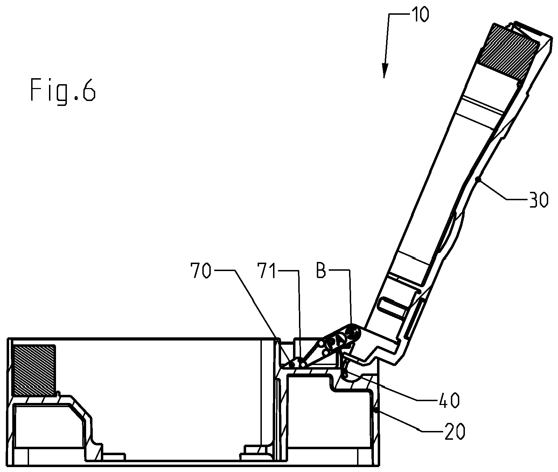

Das Arretierelement 50 kann als Hebel 51 mit einem ersten Ende 51a und einem zweiten Ende 51b ausgebildet sein, wobei der Hebel 51 an seinem ersten Ende 51a schwenkbar gelagert an der Anschlussdose 10 angeordnet ist und an seinem zweiten Ende 51b ein Anlageelement 52 aufweisen kann, welches beispielsweise als Quersteg ausgebildet sein kann. Das Anlageelement 52 kommt in der ersten Position an einer Anschlagfläche 71 zu liegen. Die Anschlagfläche 71 kann beispielsweise an dem Bodenteil 20 ausgebildet sein, während der Hebel 51 an dem Deckelteil 30 schwenkbar gelagert angeordnet sein kann. Selbstverständlich kann die Anordnung auch vertauscht ausgebildet sein. In der ersten Position ist das Arretierelement 50 derart angeordnet, dass er das Zuschnappen des Deckelteils 30 auf das Bodenteil 20 verhindert. Beispielsweise ist das Arretierelement 50 dazu derart aufgestellt, dass sein eines Ende 51a an dem Deckelteil 30 insbesondere ortsfest, beispielsweise durch die schwenkbare Lagerung, anliegt, während sein anderes Ende 51b an dem Bodenteil insbesondere ortsfest, beispielsweise durch Anlage des Anlageelements 52 an der Anschlagfläche 71, anliegt, so dass das Deckelteil 30 vom Bodenteil 20 beabstandet gehalten wird (vgl. insbesondere Fig. 6).

Die Anschlagfläche 71 kann an einem Steg 70 ausgebildet sein. Es können auch zwei parallel zueinander angeordnete Stege 70 mit jeweils einer Anschlagfläche 71 vorhanden sein, welche das Lösen des Anlageelements 52 von den Anschlagflächen 71 erleichtern können.

Es kann ein zweiter Rastmechanismus 72 vorgesehen sein, welcher die Positionierung des Anlageelements 52 an der Anschlagfläche 71 fixiert. Beispielsweise kann dazu die Anschlagfläche 71 gegen die Grundfläche des Bodenteils 20 geneigt angeordnet sein, so dass ein leichter Hinterschnitt gebildet ist, in welchem das Anlageelement 52 gegen versehentliches Lösen von der Anschlagfläche 71 gesichert sein kann.

Um das Deckelteil 30 schließen zu können, wird das Arretierelement 50 in die zweite Position überführt, insbesondere verschwenkt. Dazu kann das Arretierelement 50 beispielsweise derart verschwenkt werden, bis es etwa an der Innenseite des Deckelteils 30 anliegt (vgl. Figur 5). In dieser Position ist ein Überführen des Deckelteils 30 aus der geöffneten Position in die geschlossene Position insbesondere ohne Beeinträchtigung durch das Arretierelement 50 möglich.

Es kann ein erster Rastmechanismus 60 vorgesehen sein, welcher die Positionierung des Arretierelement 50 an dem Deckelteil 30 in der zweiten Position fixiert. Dazu können beispielsweise zwei Pins 61 parallel zueinander beabstandet an dem Deckelteil 30 angeordnet sein, zwischen welche der Hebel 51 des Arretierelements 50 geführt werden kann. An den einander zugewandten Flächen der Pins 61 kann jeweils ein Rastvorsprung 62 angeordnet sein, welcher das Arretierelement 50 zwischen den beiden Pins 61 rastend fixiert.

Um das Arretierelement 50 einfach greifen zu können, kann an dem Arretierelement 50, insbesondere an dem Hebel 51, ein erster Haltegriff 53 zum Überführen des Arretierelements 50 aus der ersten Position in die zweite Position und/oder ein zweiter Haltegriff 54 zum Überführen des Arretierelements 50 aus der zweiten Position in die erste Position ausgebildet sein. Der erste Haltegriff 53 und/oder der zweite Haltegriff 54 können als Quersteg an dem Arretierelement 50, insbesondere dem Hebel 51, ausgebildet sein.

### Bezugszeichenliste

- 10: Anschlussdose
- 12: Öffnung
- 14: Öffnung
- 16a: Öffnung
- 16b: Öffnung
- 20: Bodenteil
- 30: Deckelteil
- 40: Federelement
- 50: Arretierelement
- 51: Hebel
- 51a: erstes Ende
- 51b: zweites Ende
- 52: Anlageelement
- 53: erster Haltegriff
- 54: zweiter Haltegriff
- 60: erster Rastmechanismus
- 61: Pin
- 62: Rastvorsprung
- 70: Steg
- 71: Anschlagfläche
- 72: zweiter Rastmechanismus
- 80: Schraube
- A: Schwenkachse
- B: Schwenkachse

## Patentansprüche

1. Anschlussdose (10) mit einem Bodenteil (20) und einem
schwenkbar an dem Bodenteil (20) angeordneten Deckelteil (30), wobei zwischen dem Bodenteil (20) und dem Deckelteil (30) ein Federelement (40) angeordnet ist, welches derart vorgespannt ist, dass es das Deckelteil (30) aus einer geöffneten Position in eine geschlossene Position überführt,
**dadurch gekennzeichnet, dass** an der Anschlussdose (10) ein Arretierelement (50) angeordnet ist, welches zwischen einer ersten Position und einer zweiten Position bewegbar ist, und welches in der ersten Position das Deckelteil (20) gegen die Federkraft des Federelements (40) in der geöffneten Position arretiert und in der zweiten Position das Überführen des Deckelteils (20) aus der geöffneten Position in die geschlossene Position erlaubt.

2. Anschlussdose nach Anspruch 1,
**dadurch gekennzeichnet, dass** das Arretierelement (50) zwischen der ersten Position und der zweiten Position verschwenkbar ist.

3. Anschlussdose nach einem der vorhergehenden Ansprüche,
**dadurch gekennzeichnet, dass** das Arretierelement (50) in der ersten Position mittels eines ersten Rastmechanismus (60) fixiert ist.

4. Anschlussdose nach einem der vorhergehenden Ansprüche,
**dadurch gekennzeichnet, dass** das Arretierelement (50) in der zweiten Position mittels eines zweiten Rastmechanismus (72) fixiert ist.

5. Anschlussdose nach einem der vorhergehenden Ansprüche,
**dadurch gekennzeichnet, dass** das Arretierelement (50) als Hebel (51) mit einem ersten Ende (51a) und einem zweiten Ende (51b) ausgebildet ist, wobei der Hebel (51) an seinem ersten Ende (51a) schwenkbar gelagert an der Anschlussdose (20) angeordnet ist und wobei der Hebel (51) an seinem zweiten Ende (51b) ein Anlageelement (52) aufweist.

6. Anschlussdose nach einem der vorhergehenden Ansprüche,
**dadurch gekennzeichnet, dass** das Arretierelement (50) in der Anschlussdose (20) angeordnet ist.

7. Anschlussdose nach einem der vorhergehenden Ansprüche,
**dadurch gekennzeichnet, dass** das Arretierelement (20) an dem Deckelteil (30), insbesondere an der Innenseite des Deckelteils (30) angeordnet ist.

8. Anschlussdose nach einem der vorhergehenden Ansprüche,
**dadurch gekennzeichnet, dass** an dem Arretierelement (50) ein erster Haltegriff (53) zum Überführen des Arretierelements (50) aus der ersten Position in die zweite Position und/oder ein zweiter Haltegriff (54) zum Überführen des Arretierelements (50) aus der zweiten Position in die erste Position angeordnet ist.

9. Anschlussdose nach einem der vorhergehenden Ansprüche,
**dadurch gekennzeichnet, dass** die Anschlussdose (20) als elektrische oder optische Anschlussdose, insbesondere als abschließbare elektrische oder abschließbare optische Anschlussdose, ausgebildet ist.
